(19) **Europäisches Patentamt / European Patent Office / Office européen des brevets**

(11) **EP 4 273 783 A1**

(12) **EUROPEAN PATENT APPLICATION**
published in accordance with Art. 153(4) EPC

(43) Date of publication:
**08.11.2023 Bulletin 2023/45**

(21) Application number: **20968034.7**

(22) Date of filing: **29.12.2020**

(51) International Patent Classification (IPC):
**G06Q 50/06** *(2012.01)* **H02J 7/00** *(2006.01)*
**H02J 7/02** *(2016.01)* **H02J 3/00** *(2006.01)*
**B60L 53/14** *(2019.01)*

(52) Cooperative Patent Classification (CPC):
**B60L 53/14; G06Q 50/06; H02J 3/00; H02J 7/00;
H02J 7/02;** Y02T 10/70

(86) International application number:
**PCT/JP2020/049275**

(87) International publication number:
**WO 2022/145024 (07.07.2022 Gazette 2022/27)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **MITSUBISHI ELECTRIC
CORPORATION
Chiyoda-ku
Tokyo 100-8310 (JP)**

(72) Inventor: **OKUMURA, Yuta
Tokyo 100-8310 (JP)**

(74) Representative: **Meissner Bolte Partnerschaft
mbB
Widenmayerstrasse 47
80538 München (DE)**

(54) **CHARGING/DISCHARGING CONTROL DEVICE AND CHARGING/DISCHARGING CONTROL METHOD**

(57) The present invention includes an EV information management unit (101) configured to manage charging/discharging capacity information of a plurality of electric vehicles, a schedule information management unit (102) configured to manage schedule information of charging/discharging the electric vehicles, a charger/discharger information management unit (103) configured to manage charging/discharging unit information of charging/discharging units, a facility information management unit (106) configured to manage information on power rate, a charging/discharging unit grouping unit (104) configured to group the charging/discharging units on the basis of the charging/discharging unit information, an allocation constraint setting unit (105) configured to set allocation constraints for the charging/discharging units on the basis of the schedule information, for each group of the charging/discharging units, and a charging/discharging plan creation unit (107) configured to create a charging/discharging plan by allocating the group of charging/discharging units to the electric vehicles so as to reduce power cost on the basis of the allocation constraints, the charging/discharging capacity information, and the power rate information.

FIG. 1

**Description**

TECHNICAL FIELD

This invention relates to a technique for controlling charging/discharging.

BACKGROUND ART

An Energy Management System (EMS) has been known that controls charging/discharging of a charging/discharging unit connected to power transfer facilities such as a storage battery or an EV in a parking lot for electric vehicles (EV). Also, a system for further optimal charging has been proposed in which charging facilities are to be designed that include the minimum necessary capacity and the number of charging units for a business operator who owns a plurality of EVs to complete charging of the plurality of EVs by the start time of use during outside of use time of each EV (Patent Document 1).

PRIOR ART DOCUMENTS

PATENT DOCUMENT

[Patent Document 1] Japanese Patent Application Laid-Open JP 2012- 186 895 A

SUMMARY

PROBLEM TO BE SOLVED BY THE INVENTION

A charging/discharging plan in order to reduce power costs, peak shave, etc. while securing the state of charge required for EVs to travel before departure, and when the number of charging/discharging units is fewer than the number of EVs, consideration is required to be given to allocation (hereinafter simply referred to as "allocation") in terms of not only how much is to be charged, but also to which EV is to be charged from which charging/discharging units.

Here, assuming a large-scale EV parking lot, the number of allocation patterns described above becomes enormous, and if a computer were to calculate the optimum allocation, a huge computational load would be imposed. A technique that reduces the computational load when creating the optimal charging/discharging plan is demanded.

MEANS TO SOLVE THE PROBLEM

In order to solve the above problem, an EV information management unit configured to manage charging/discharging capacity information of a plurality of electric vehicles, a schedule information management unit configured to manage schedule information of charging/discharging the electric vehicles, a charger/discharger information management unit configured to manage charging/discharging unit information of charging/discharging units, a facility information management unit configured to manage information on power rate, a charging/discharging unit grouping unit configured to group the charging/discharging units on the basis of the charging/discharging unit information, an allocation constraint setting unit configured to set allocation constraints for the charging/discharging units on the basis of the schedule information, for each group of the charging/discharging units, and a charging/discharging plan creation unit configured to create a charging/discharging plan by allocating the group of charging/discharging units to the electric vehicles so as to reduce power cost on the basis of the allocation constraints, the charging/discharging capacity information, and the power rate information are included.

EFFECTS OF THE INVENTION

According to the charging/discharging control device and the charging/discharging control method of the present invention, the calculation load for creating a charging/discharging plan is reduced.

BRIEF DESCRIPTION OF DRAWINGS

FIG. 1 A block diagram illustrating an EV-using business operator facility in a first embodiment.
FIG. 2 A block diagram illustrating a charging/discharging control device in the first embodiment.

FIG. 3 A flowchart of processing of the first embodiment.

FIG. 4 A table illustrating an example of EV information stored in an EV information management unit of the first embodiment.

FIG. 5 A table illustrating an example of charging/discharging unit information stored in a charging/discharging unit information management unit of the first embodiment.

FIG. 6 A table illustrating facility information stored in a facility information management unit of the first embodiment, which is information on power rate contracted by the facility.

FIG. 7 A table illustrating facility information stored in the facility information management unit of the first embodiment, which is information on the upper and lower limit values of power receiving point power amount of the facility.

FIG. 8 A table illustrating parking lot information stored in a parking lot information management unit of the first embodiment.

FIG. 9 A diagram illustrating the positional relationship of which charging/discharging units 14 of the first embodiment are in which sections.

FIG. 10 A table illustrating an example of schedule information stored in a schedule information management unit of the first embodiment.

FIG. 11 A table illustrating an example of grouped charging/discharging unit information of the first embodiment.

FIG. 12 A table illustrating the number of allocation patterns when the charging/discharging units of the first embodiment are grouped.

FIG. 13 A table illustrating the number of allocation patterns when the charging/discharging units of the first embodiment are not grouped.

FIG. 14 A table illustrating an example of a charging/discharging plan of the first embodiment.

FIG. 15 A block diagram illustrating hardware of the charging/discharging control device.

FIG. 16 A block diagram illustrating a charging/discharging control device in in a second embodiment.

FIG. 17 A flowchart of processing of the second embodiment.

FIG. 18 A table illustrating an example of a charging/discharging performance information acquired in the second embodiment.

## DESCRIPTION OF EMBODIMENTS

First Embodiment

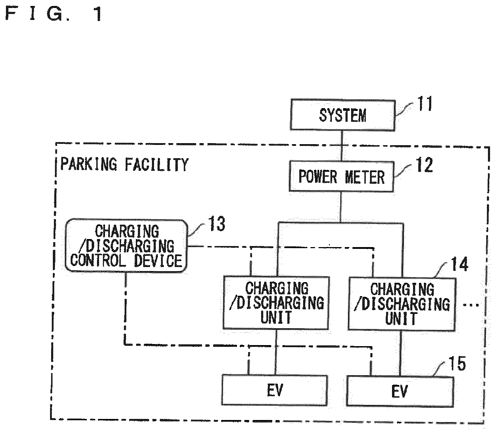

FIG. 1 is a block diagram illustrating an EV-using business operator facility in a first embodiment. It is assumed that the EV-using business operator facility is connected to a system 11, and that charging/discharging units 14 and electric vehicles (hereinafter referred to as EVs) 15 as power facilities of the EV-using business operator facility. These facilities do not need to be one unit, and may be a plural of units. The power facilities such as the charging/discharging units 14 and the EVs 15 is connected to a charging/discharging control device 13 that controls charging/discharging of the charging/discharging units 14.

In addition, the power flowing in and out of the EV-using business operator facility from the system 11 is measured by a power meter 12 such as a smart meter that can measure power amount for 30 minutes. A power cost paid by an EV-using business operator to a retailer (although the case of outflow means sales, it is generalized that the power cost being negative is considered as sales) is based on a measured value by the power meter 12, in other words, the measured value is used as the power receiving point power amount.

In the present embodiment, the same theory can be applied considering the charging/discharging unit 14 being connected to the EV 15, and although no storage battery is assumed, which is considered as an EV 15 that is ever parked and whose allocation is fixed. The EV 15 in the present embodiment is a concept broadly including a storage battery therein.

Although in the present embodiment, each EV 15 has one outlet (socket) and each charging/discharging unit 14 has one plug, there may be more than one. Which charging/discharging unit 14 connected to the EV 15 is connected to is determined on the basis of a charging/discharging plan calculated by the charging/discharging control device 13.

Although in the present embodiment, the charging/discharging control device 13 is composed of a PC and a program in the parking lot, this is not limited thereto, and may be a PC and a program connected outside the parking lot via a network. The charging/discharging control device 13 is capable of communicating with the power meter 12, the charging/discharging units 14, the EVs 15, and the like. A performance value of the power receiving point power amount can be obtained from the power meter 12.

The performance value of the charging/discharging power can be obtained from the charging/discharging unit 14, and a command value of the charging/discharging power can be transmitted to the charging/discharging unit 14. The current State of Charge (SOC) and the schedule can be obtained from the EV 15, and the charging/discharging plan can be transmitted to the EV 15.

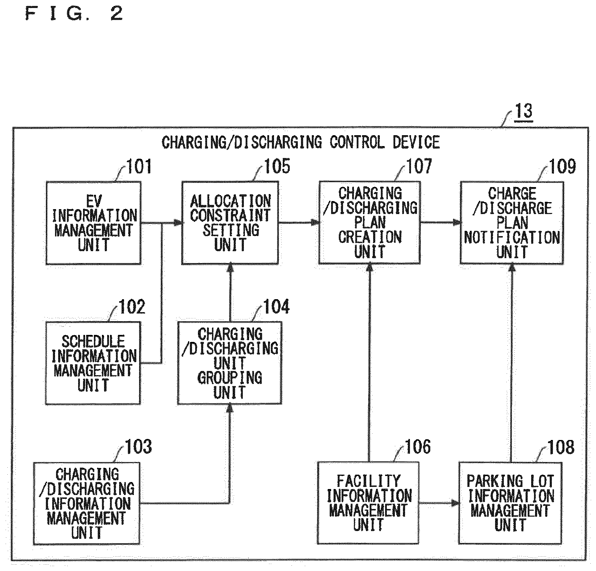

FIG. 2 is a block diagram illustrating the charging/discharging control device 13 in the present embodiment. The charging/discharging control device 13 in the present embodiment includes an EV information management unit 101, a schedule information management unit 102, a charging/discharging unit information management unit 103, a charging/discharging unit grouping unit 104, an allocation constraint setting unit 105, a facility information management unit 106, a charging/discharging plan creation unit 107, a parking lot information management unit 108, and a charging/discharging plan notification unit 109.

The EV information management unit 101 manages EV information, which is information regarding a specification of each EV 15. The EV information is charging/discharging capacity information of the EVs 15, for example. The schedule information management unit 102 manages schedule information, which is a usage schedule for each EV 15. Here, the usage schedule is, for example, information on a schedule of the EV 15 arriving at a charging station and being set to be charged/discharged.

The charging/discharging unit information management unit 103 manages charging/discharging unit information, which is information on a specification of each charging/discharging unit 14. The charging/discharging unit information is, for example, information on specifications of the charging/discharging units. The charging/discharging unit grouping unit 104 groups the charging/discharging units 14 on the basis of the charging/discharging unit information. For example, the charging/discharging unit grouping unit 104 groups the charging/discharging units 14 with similar specifications.

The charging/discharging unit information management unit 103 may group the units using model numbers when the specifications are model numbers. For example, the charging/discharging unit information management unit 103 groups units with the same model number. As long as the charging/discharging units have similar specifications, how to specify thereof is not limited thereto. Here, although units are grouped from the similarity of their specifications, grouping is not limited thereto. For example, there are only the charging/discharging units with similar specifications, the positional relationship of the charging/discharging units may be stored in the charging/discharging unit information and be controlled to group the units with the close positional relationship of the charging/discharging units.

The allocation constraint setting unit 105 sets constraints such as the maximum number of the charging/discharging units 14 connectable to each EV 15 and the maximum number of the EVs 15 connectable from each charging/discharging unit 14 on the basis of the schedule information for each group of the charging/discharging units 14. The facility information management unit 106 manages facility information related to power rate information (contracted power, unit rate, etc.) that the EV usage operator makes a contract with the power retailer.

The charging/discharging plan creation unit 107 creates a charging/discharging plan by allocating a charging/discharging group to the EVs 15 such that the charging cost is to be reduced on the basis of the allocation constraints, the EV information, and the facility information. More specifically, the charging/discharging plan creation unit 107 creates a charging/discharging plan on the basis of the allocation constraints, the charging/discharging capacity information in the EV information, and power rate information in the facility information.

The parking lot information management unit 108 manages parking lot information that specifies the positional relationship between the partition of the parking space and the charger/discharger 14. The charging/discharging plan notification unit 109 notifies each EV 15 of the created charging/discharging plan based on the parking lot information.

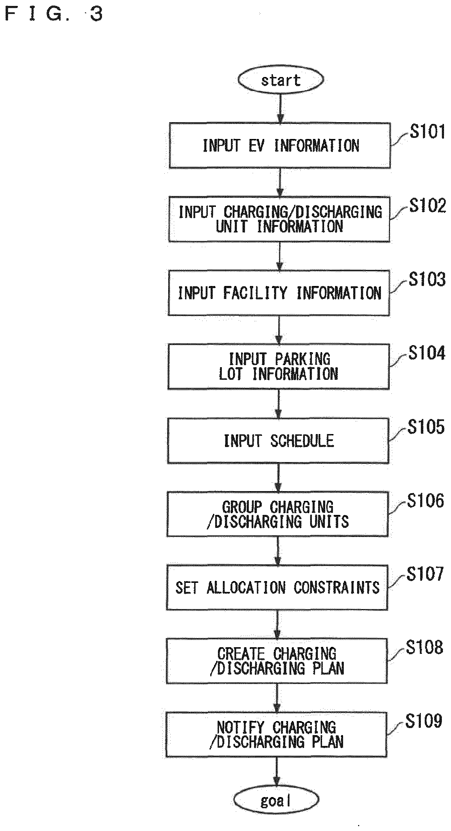

FIG. 3 is a flowchart of processing of the present embodiment. The processing will be described below with reference to the flowchart. The following is a description regarding the creation of a charging/discharging plan as to power amount [kWh] for each of 24 divisions of a 60-minute unit, starting from the current time for 24 hours, where it is assumed that the current time: 2020/1/1 00:00. There are three charging/discharging units 14 in total, in which two quick charging units and one regular charging unit. And there are four EVs 15 in total.

Describing the processing will represent the charging/discharging units 14 being grouped to reduce the amount of calculation. In terms of specific meaning of the similarity of specifications, the maximum charging power, the maximum discharging power, the charging efficiency, and discharging efficiency, which are specifications that affect charging time, are dealt with. Here, although the grouping is based on similar specifications, this is not limited thereto, and the grouping may be based on the charging/discharging unit information.

In Step S101, the EV information is input to the charging/discharging control device 13. The method of inputting the EV information may be acquisition from an external database, or may be direct input to the charging/discharging control device 13, and the method of input is not limited.

The EV information is acquired by manual input by the operator of the charging/discharging control device 13 or acquired from the EV 15 via the CHAdeMO protocol, and stored in the EV information management unit 101.

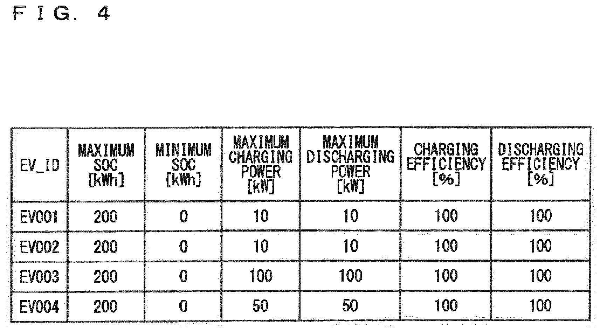

FIG. 4 is a table illustrating an example of the EV information stored in the EV information management unit 101. The EV information management unit 101 stores the EV information. As the EV information, the EV information management unit 101 stores the charging/discharging capacity information of the EVs 15, such as the ID of each EV 15, the maximum SOC, the minimum SOC, the maximum charging power, the maximum discharging power, the charging efficiency, discharging efficiency of the EV 15.

In Step S102, the charging/discharging unit information is input to the charging/discharging control device 13.

The method of inputting the charging/discharging unit information may be acquisition from an external database, or may be direct input to the charging/discharging control device 13, and the method of input is not limited.

The charging/discharging unit information is acquired by manual input by the operator of the charging/discharging control device 13 or acquired from the charging/discharging unit 14 via the OpenADR protocol, and stored in the charging/discharging unit information management unit 103.

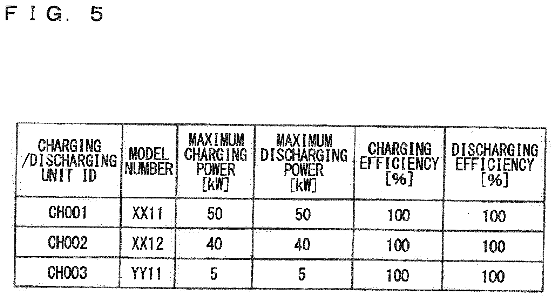

FIG. 5 is a table illustrating an example of the charging/discharging unit information stored in the charging/discharging unit information management unit 103. The charging/discharging unit information management unit 103 stores the charging/discharging unit information. The charging/discharging unit information management unit 103 stores the ID, the maximum charging power, the maximum discharging power, the charging efficiency, discharging efficiency of each charging/discharging unit 14 as the charging/discharging unit information. In the present embodiment, the charging/discharging unit information is information on specifications of the charging/discharging units. In the example of FIG. 5, IDs CH001 and CH002 represent the quick charging units, and an ID CH003 represents a regular charging unit.

In Step S103, the facility information is input to the charging/discharging control device 13. The method of inputting the facility information may be acquisition from an external database, or may be direct input to the charging/discharging control device 13, and the method of input is not limited. The facility information is input manually by the operator of the charging/discharging control device 13 and stored in the facility information management unit 106.

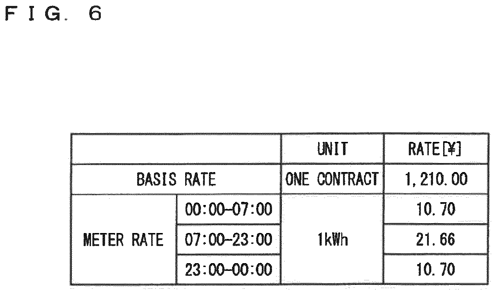

FIG. 6 is a table illustrating the facility information stored in the facility information management unit 106, which is information on power rate contracted by the facility. For example, information of the basis rate and the meter unit rate is stored. The power charge can be specified on the basis of the facility information.

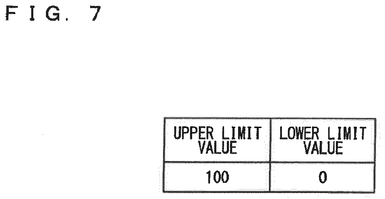

FIG. 7 is a table illustrating the facility information stored in the facility information management unit 106, which is information on the upper and lower limit values of power receiving point power amount of the facility. The upper limit value and the lower limit value of power from the power receiving point can be specified on the basis of the facility information.

The basis rate is the monthly charge charged regardless of the utilization status of power. The meter rate a charge charged according to the utilization status of power, and the unit rate varies depending on the time zone in which the power is used. In the example of FIG. 6, when a reduction in power costs imposed through charging/discharging the EV 15 is sought, implementation of charging between 00:00 to 07:00 or 23:00 to 00:00, when the unit rate is cheaper, and discharging between 07:00 to 23:00 is essential.

In Step S104, the parking lot information is input to the charging/discharging control device 13. The method of inputting the parking lot information may be acquisition from an external database, or may be direct input to the charging/discharging control device 13, and the method of input is not limited.

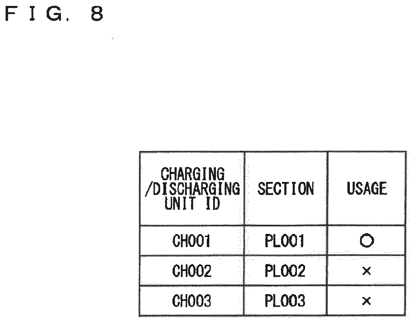

FIG. 8 is a table illustrating the parking lot information stored in the parking lot information management unit 108, and more specifically, is a table illustrating information that manages which charging/discharging unit 14 is in which section and which charging/discharging 14 is occupied. Information specifying whether or not it is occupied indicates whether or not the section is parked, in which, the connection state which is obtained through parking blocks in a metered parking space or CHAdeMO protocol may be reflected, or information indicating that it is in use may be obtained from the charging/discharging unit 14. The section in FIG. 8 is a parking space for the EV 15 and represents a section that can be connected from each charging/discharging unit 14.

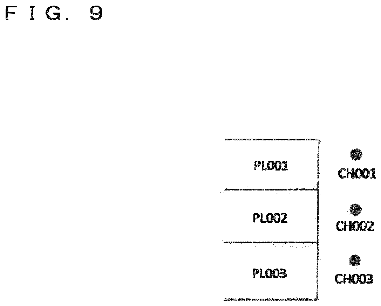

FIG. 9 is a diagram illustrating the positional relationship of which charging/discharging units 14 are in which sections. In the example of FIG. 9, for example, the charging/discharging unit IDCH001 being located near the section PL001 is understood.

The parking lot information is input manually by the operator of the charging/discharging control device 13 and stored in the parking lot information management unit 108. Also, the parking lot information may be acquired from an external database or the like, and the manner of management thereof in the parking lot information management unit 108 is not limited.

In the present embodiment, only one section can be connected to one charging/discharging unit, however, it may be allowed that a plurality of sections may be connected for one charging/discharging unit with the reasons such as the plug being long enough or the charging/discharging unit 14 being located between the sections.

In Step S105, the schedule information is input to the charging/discharging control device 13. The schedule information is acquired by manual input by the operator of the charging/discharging control device 13, or transmitting thereof from an external terminal such as a satellite navigation system of the EV 15 or a smartphone of the driver of the EV to the charging/discharging control device 13, and is stored in the schedule management unit 102.

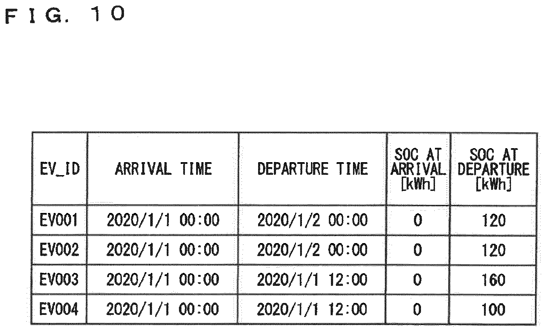

FIG. 10 is a table illustrating an example of the schedule information stored in the schedule information management unit 102. In the schedule information, the ID of each EV 15, the arrival time of the EV 15, the departure time of the EV 15, the SOC at arrival for the EV 15, and the required SOC at departure for the EV 15 are managed. In the present embodiment, the arrival time and departure time are written as yyyy/MM/dd hh:mm.

By managing this information, a schedule enabling the EVs 15 to charging/discharging can be managed. The format of the schedule information is not limited as long as the schedule enabling the EVs 15 to charging/discharging can be managed.

In Step S106, the charging/discharging unit grouping unit 104 groups the charging/discharging units 14. The charging/discharging unit grouping unit 104 groups the charging/discharging units 14 on the basis of the charging/discharging unit information. More specifically, the charging/discharging units 14 with similar specifications are one group. A group of the charging/discharging units 14 is referred to as a charging/discharging unit group.

Here, the similar specification means that the specifications of the charging/discharging units are similar to one another, and includes information on the maximum charging power, the maximum discharging power, the charging efficiency, the discharging efficiency, and model number information of the charging/discharging units. When grouping is implemented by model numbers, the charging/discharging units having the same model number are grouped. Although the grouping is based on similar specifications in the present embodiment, the method therefor is not limited thereto as long as the grouping is implemented on the basis of the charging/discharging unit information.

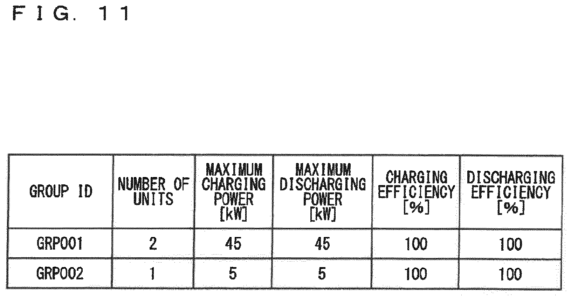

FIG. 11 is a table illustrating the grouped charging/discharging unit information. The number of grouped charging/discharging units 14 and specifications of the charging/discharging units 14 are stored for each group ID that identifies a group. Here, as specifications of the charging/discharging units 14, the maximum charging power, the maximum discharging power, the charging efficiency, and the discharging efficiency are managed. Also, although not illustrated, the charging/discharging unit IDs may be managed for each group so that which charging/discharging unit ID belongs to which group can be specified.

In the present embodiment, of the three charging/discharging units, there are two quick charging units and one regular charging unit. As a result of grouping, the quick charging units belong to group ID: GRP001, and the regular charging unit belongs to group ID: GRP002. As a grouping method, for example, the k-means method used in fields such as machine learning is used. Here, the k-means method will be described. The k-means method includes four processes as follows.

Process 1: Randomly assign the charging/discharging unit k (k=CH001, CH002, CH003) into groups. Here, the number of groups is 2.

Process 2: Calculate the center V(j)(j=GRP001, GRP002) of each group on the basis of the assigned groups. The center of a group is the average of the specifications of the charging/discharging units 14 (the maximum charging power, the maximum discharging power, the charging efficiency, and the discharging efficiency). For example, when CH001 and CH003 belong to the same group GRP001, the center V(GRP001) of GRP001 is calculated as in Expression 1 below.

[Expression 1]

$$V(GRP001) = \left(\frac{50+5}{2}, \frac{50+5}{2}, \frac{100+100}{2}, \frac{100+100}{2}\right) = \left(\frac{55}{2}, \frac{55}{2}, 100, 100\right)$$

$$\cdots (1)$$

Process 3: Find the distance for any combination of the charging/discharging units k and the center V(j) of the group, and reassign the charging/discharging unit k to the group with the shortest distance. As the distance between the charger/discharger k and the group center V(j), for example, the L1 norm is adopted. The distance between the charging/discharging unit CH002 and the above V(GRP001) is calculated as in Expression 2 below. However, |x| means taking the absolute value with respect to x.

[Expression 2]

$$\|V(GRP001), CH001\| = \left(\left|\frac{55}{2} - 40\right|, \left|\frac{55}{2} - 40\right|, |100 - 100|, |100 - 100|\right)$$

$$\cdots (2)$$

Processing 4: When the allocation of all the charging/discharging units 14 to the groups does not change after the above processes, or when the amount of change falls below a preset constant threshold, it is determined that convergence has completed, and the process ends with the center of the group being set as the grouped charging/discharging units 14. Otherwise, recalculate the group center V(j) from the newly allocated group and repeat the above processes.

The grouped charging/discharging units 14 can be treated as charging/discharging units 14 virtually having a plurality of plugs. Here, the number of allocation patterns with grouping and the number of allocation patterns without grouping are compared.

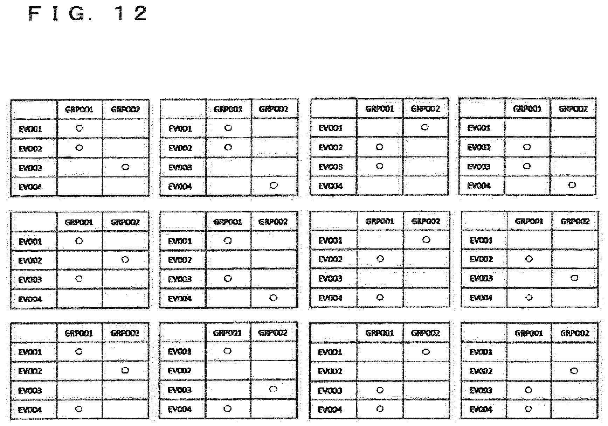

FIG. 12 is a table illustrating the number of allocation patterns when the charging/discharging units 14 are grouped and illustrated which EV 15 is allocated to which group. The example of FIG. 12 illustrates that there are 12 allocation patterns in total.

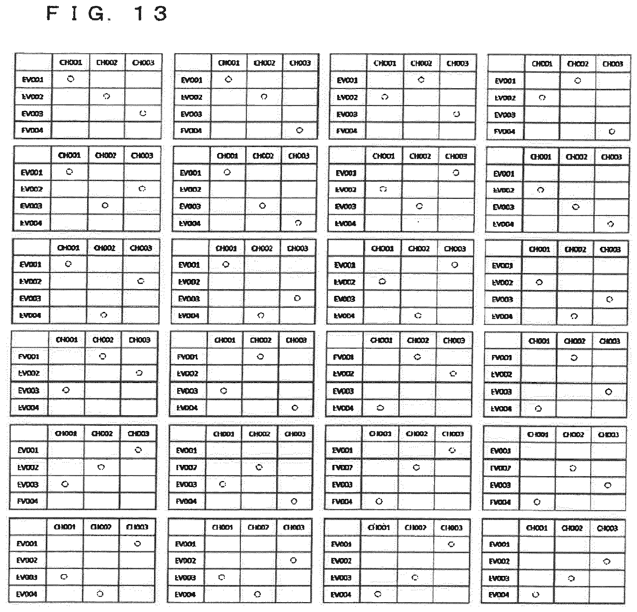

FIG. 13 is a table illustrating the number of allocation patterns when the charging/discharging units 14 are not grouped. The table illustrates which charging/discharging units 14 are allocated to which group. The example of FIG. 13 illustrates that there are 24 allocation patterns in total. In other words, grouping reduces the number of allocation patterns is understood. However, in this example, it is assumed to be the time section where all four EVs are parked and no charging/discharging units 14 without allocation are present.

In Step S107, the allocation constraint setting unit 105 sets allocation constraints. The allocation constraint setting unit 105 sets allocation constraints for the charging/discharging units 14, such as the maximum number of the charging/discharging units 14 connectable to each EV 15 and the maximum number of the EVs 15 connectable from each charging/discharging unit 14 on the basis of the schedule information.

Specifically, consider variables EC(i, j, t) that take 1 when charging/discharging from the charging/discharging group i(i=GRP001, GRP002) to the EVj(j=EV001, EV002, EV003, EV004) and 0 otherwise at time t(t=1, ..., 24). Each EV 15 has one outlet; therefore, charging/discharging from two or more of the charging/discharging units 14 to one EV 15 cannot be implemented at the same time. In other words, Expression 3 below need to be satisfied with regard to t and i for all.

[Expression 3]

$$\sum_{j} EC(i,j,t) \le 1$$

$$... (3)$$

Some charging/discharging units 14 belong to the charging/discharging group j by grouping; therefore, the number of plugs in each charging/discharging group is considered to be the number of the charging/discharging units 14 belonging to that group. That is, assuming that the number of the charging/discharging units 14 included in the charging/discharging group j is N(j), Expression 4 below needs to be satisfied with regard to t and j for all.

[Expression 4]

$$\sum_{i} EC(i,j,t) \le N(j)$$

$$... (4)$$

Note that the variables EC(i, j, t) are still variables at this stage, and the specific value (whether it is 0 or 1) is determined by the charging/discharging plan creation unit 107. The decision is implemented by solving an optimization problem, and in doing so, the smaller the number of variables EC(i, j, t), the shorter the calculation time.

Grouping the charging/discharging units 14 here makes the variables EC(i, j, t) become smaller than the variables when no grouping is implemented, and the calculation time being shortened is understood.

In Step S108, the charging/discharging plan creation unit 107 creates a charging/discharging plan. The charging/discharging plan is a plan for allocating which charging/discharging group to which EV 15 in which time zone.

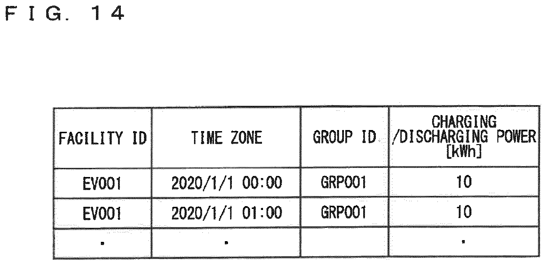

FIG. 14 is a table illustrating an example of a charging/discharging plan. The charging/discharging plan stores how much charging/discharging is implemented by which group in what time zone for each facility. The group in FIG. 14 is a charging/discharging group ID allocated to an EV 15 of each facility, and the charging/discharging amount of the group is stored. The charging/discharging plan creation unit 107 allocates the charging/discharging group to the EVs 15 such that the power cost is to be reduced on the basis of the allocation constraints, the EV information, and the facility information.

The charging/discharging unit ID and the charging/discharging amount are obtained as follows, for example, the power cost is to be the objective function, and the optimization problem is solved with the allocation constraints, a supply-demand balance constraint, a constraint of power receiving point power amount, and a storage battery constraint as constraint conditions. First, consider the following Expressions 5 and 6 as the power cost. The power cost is calculated on the basis of the facility information.

[Expression 5]

$$\min \sum_{t}^{24} Buy\_Cost(t)$$

$$\dots (5)$$

[Expression 6]

$$Buy\_Cost(t) = Buy(t) \times Buy\_rate(t)$$

$$\dots (6)$$

Here, Buy_Cost(t), Buy(t), and Buy_rate(t) represent the power cost at time t, the power receiving point power amount at time t, and the unit rate at time t, respectively. Then, the objective function, which is the power cost with the allocation change cost added, may be used. Next, consider Expression 7 below as the supply-demand balance constraint. The supply-demand balance constraint is subjected to the allocation constraint.

[Expression 7]

$$Buy(t) = -\sum_{i}^{M} \sum_{j}^{N(j)} EC(i,j,t) \times Inv(j,t)$$

$$\dots (7)$$

Here, Inv(j, t) represents the charging/discharging amount to the EVj at time t. However, when Inv(j, t) is positive, it means discharging, and when Inv(j, t) is negative, it means charging. This Expression indicates that the power receiving point power amount is covered by discharging from the EV 15. Thus, the power receiving point power amount purchased at time t is the total power amount charged to each EV at time t. Next, consider Expression 8 below as the constraint of power receiving point power amount.

[Expression 8]

$$Buy\_min \le Buy(t) \le Buy\_max$$

$$\dots (8)$$

Here, Buy_min and Buy_max represent the lower limit value and the upper limit value of the power receiving point power amount, respectively. Next, consider Expression 9 to Expression 11 below as the storage battery constraint. The storage battery constraint here is set on the basis of the EV information.

[Expression 9]

$$SOC(j, t+1) = SOC(j, t)$$
$$- \sum_{i}^{M} EC(i,j,t) \times \left\{ \frac{1}{eff\_out(i)} \times Inv\_out(j,t) + eff\_in(i) \times Inv\_in(j,t) \right\}$$

$$\dots (9)$$

[Expression 10]

$$Inv(j,t) = Inv\_out(j,t) + Inv\_in(j,t)$$

$$... (10)$$

[Expression 11]

$$\begin{cases} -Inv\_min(j) \le Inv(j,t) \le Inv\_max(j,t) & (in\_time(j) \le t \le out\_time(j)) \\ \qquad\qquad Inv(j,t) = 0 & (others) \end{cases}$$

$$... (11)$$

Here, SOC(j, t) represents the SOC of the EVj at time t. eff_out(i) represents the discharging efficiency of the EVj. Inv_out (j, t) represents the discharging amount of the EVj at time t. eff_in(i) represents the charging efficiency of the EVj. Inv_in(j, t) represents the charging amount of the EVj at time t. Inv(j, t) represents the charging/discharging amount to the EVj at time t.

Inv _min(j) represents the maximum charging power of the EVj. Inv _min(j) represents the maximum discharging power of the EVj. in_time(j) represents the arrival time of the EVj. out_time(j) represents the departure time of the EVj. The allocation constraints set by the allocation constraint setting unit 105 are used.

In the above optimization problem, the explanatory variables are EC(i, j, t), Inv_out(j, t), Inv_in(j, t), SOC(j, t), Buy(t). The optimization problem represented here is a mere example. For example, if no solution exists that satisfies the constraint conditions, a slack variable may be introduced to each constraint expression and set the objective function so that the slack variable is small, thereby calculating suboptimal solution when the constraint conditions are not satisfied.

In Step S109, the charging/discharging plan notification unit 109 notifies the EV 15 of the charging/discharging plan. The charging/discharging plan notification unit 109 notifies of the created charging/discharging plan. The notification may be notified to the satellite navigation system of each EV 15 and displayed on the screen or the like, or notified to a smartphone of the EV driver. The method of notification is not limited.

Which section should be parked upon arrival for an EV 15 being away, is determined, on the basis of the notified charging/discharging plan, by specifying, from the group ID, the charging/discharging unit 14 by the grouped charging/discharging unit information and the like, and, from the specified charging/discharging unit 14 and the parking lot information, specifying which section the specified charging/discharging unit 14 is. In this case, the satellite navigation system or the smartphone may be caused to display which section the specified charging/discharging unit 14 is located in.

For example, in the case of the allocation upon arrival being group ID: GRP001 in the charging/discharging plan, the charging/discharging unit IDs to which this group belongs are CH001 and CH002, so the sections PL001 and PL002 are to be such sections. In the parking lot information, when the section PL001 is occupied, section PL002 is presented as the section upon arrival. When both PL001 and PL002 are not occupied, both sections are presented and the user of the EV 15 chooses which section for charging/discharging in.

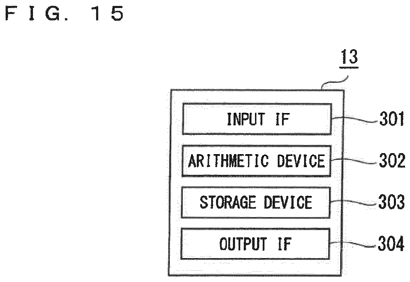

FIG. 15 is a block diagram illustrating hardware of the charging/discharging control device 13. The charging/discharging control device 13 includes an input interface 301, an arithmetic device 302 such as a Central Processing Unit (CPU), a storage device 303 and an output interface 304. The interface is hereinafter written as IF.

The EV information management unit 101, the schedule information management unit 102, the charging/discharging unit information management unit 103, the facility information management unit 106, the parking lot information management unit 108, and the like are included in the storage device 303, and the functions of the charging/discharging unit grouping unit 104, the allocation constraint setting unit 105, the charging/discharging plan creating unit 107, and the like are implemented by the arithmetic unit 302 executing a program.

Data such as the EV information, the schedule information, the charging/discharging unit information, and the facility information are input from the input IF 301. The input may be received directly from the user or may be received from an external data server, and the input source is not limited. The output IF 304 outputs the created charging/discharging plan and the like.

The IF is a wired port such as a cable port, a USB port, a direct connection port, or a wireless network port. A storage device 303 is a storage medium such as an HDD, an SSD, or a flash memory.

With this configuration, even if there is a delay in the arrival of the EV or a sudden change in the departure time, the state of charge required for traveling of the EV is secured and the reduction in the power cost is implemented, by shortening the calculation time and creating the charging/discharging plan more quickly.

Reduction of calculation time for creating the optimal charging/discharging plan, which completes charging by the start time of the use of the EV, minimizes the power cost of the EV user, and the like, is ensured.

Second Embodiment

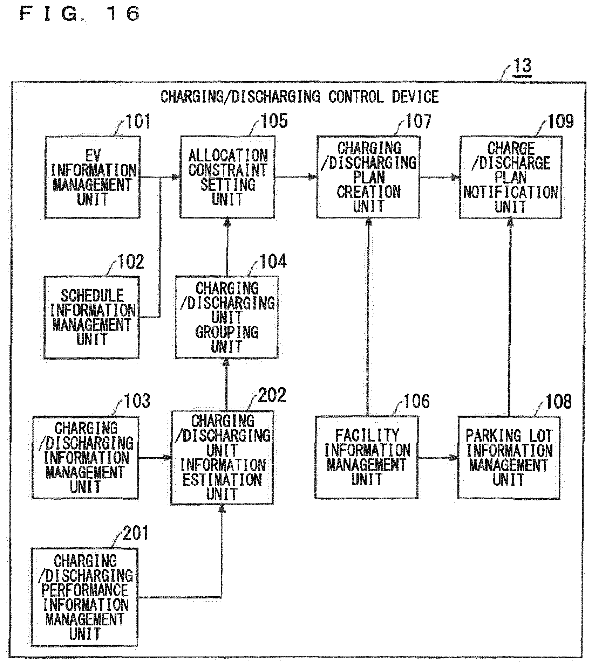

FIG. 16 is a block diagram illustrating a charging/discharging control device 13 in a second embodiment. In the first embodiment, the charging/discharging units 14 with similar specifications are grouped together, but the specifications of the charging/discharging units 14 deteriorate depending on the frequency of use and the number of years of use; therefore, there is a problem that the accuracy is insufficient if the grouping is based on the specifications described in the specifications.

The present embodiment is characterized by estimating the specifications of the charging/discharging units 14 on the basis of the charging/discharging performance. In the present embodiment, the charging efficiency is taken up as a specification to be estimated. A difference from the first embodiment is that a charging/discharging performance information management unit 201 and a charging/discharging unit information estimation unit 202 are added.

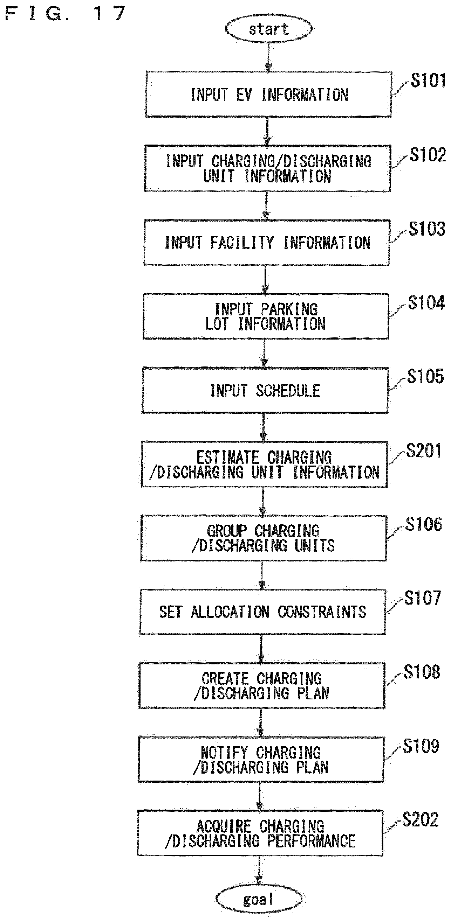

FIG. 17 is a flowchart of processing of the second embodiment. The difference from the first embodiment is that Steps S201 and S202 are added, and these will be described below. Although Step S202 is performed after the schedule information is input in Step S105, this is not the sole option.

In Step S201, the charging/discharging unit information estimation unit 202 estimates charging/discharging unit information on the basis of the charging/discharging performance information acquired by the charging/discharging performance information management unit 201, and updates the charging/discharging unit information. The charging/discharging unit grouping unit 104 groups the charging/discharging units on the basis of the estimated charging/discharging unit information.

Here, the charging/discharging performance information is acquired in Step S202, and the charging/discharging units 14 change with age; therefore, the charging/discharging performance information is continuously acquired and updated. It is assumed that this process is repeated. At the first time, the catalog values may be stored as the specification information of the charging/discharging unit information.

In Step S202, the charging/discharging performance information management unit 201 acquires the charging/discharging performance information. The charging/discharging performance information management unit 201 manages the charging/discharging performance of each of the charging/discharging units. The charging/discharging performance is acquired from the charging/discharging unit 14 through the OpenADR protocol or the like, and stored in the charging/discharging performance management unit 201.

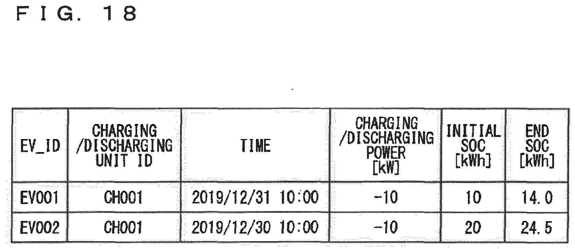

FIG. 18 is a table illustrating an example of the charging/discharging performance information to be acquired. Which charging/discharging unit 14 has what performance is stored. As the performance, the actual values of charging/discharging power at a certain time and information on how much the SOC has changed are stored. Although the combination of the EV_ID and the charging/discharging unit ID is also stored in the example of FIG. 18, it is not limited thereto.

In the example of FIG. 18, the time represents the charging/discharging performance in 30 minutes. The charging/discharging power is defined as positive for discharging and negative for charging. The initial SOC and the end SOC when charging ends are stored and how much the SOC has changed from what to what is managed.

Here, as estimation of the charging/discharging information, a method of calculating an estimated value of charging/discharging efficiency will be described. For example, the actual average is used as described below. A case where the charging/discharging performance information is illustrated in FIG. 18 will be described. The method of estimation may be any known methods and is not limited to the following method.

The increments of SOC are 4.0 [kWh] and 4.5 [kWh] at time 2019/12/31 10:00 and time 2019/12/30 10:00, respectively, for charging/discharging unit 14 with the charging/discharging ID CH001. The charging efficiency is $4/(10\times30/60)\times100=80$ [%], and $4.5/(10\times30/60)\times100=90$ [%], respectively, with 30-minute 10 [kW] charging performed, respectively, thus, the actual average is $(80+90)/2=85$ [%].

By estimating the charging/discharging unit information in this manner, the probability of charging/discharging according to the charging/discharging plan rises, which raises the probability of securing the amount of state of charge required for traveling of the EV and the probability of achieving the reduction in power cost.

EXPLANATION OF REFERENCE SIGNS

101     EV information management unit,

102     schedule information management unit,

103     charging/discharging unit information management unit,

104     charging/discharging unit grouping unit,

105     allocation constraint setting unit,

106     facility information management unit,

107     charging/discharging plan creation unit,

108     parking lot information management unit,

109     charging/discharging plan notification unit,

201     charging/discharging performance information management unit,

202     charging/discharging unit information estimation unit.


**Claims**

1.  A charging/discharging control device comprising:

    an EV information management unit configured to manage charging/discharging capacity information of a plurality of electric vehicles;
    a schedule information management unit configured to manage schedule information of charging/discharging the electric vehicles;
    a charger/discharger information management unit configured to manage charging/discharging unit information of charging/discharging units;
    a facility information management unit configured to manage information on power rate;
    a charging/discharging unit grouping unit configured to group the charging/discharging units on the basis of the charging/discharging unit information;
    an allocation constraint setting unit configured to set allocation constraints for the charging/discharging units on the basis of the schedule information, for each group of the charging/discharging units; and
    a charging/discharging plan creation unit configured to create a charging/discharging plan by allocating the group of charging/discharging units to the electric vehicles so as to reduce power cost on the basis of the allocation constraints, the charging/discharging capacity information, and the power rate information.

2.  The charging/discharging control device according to claim 1, wherein
    the charging/discharging unit grouping unit is configured to perform grouping by similarity of the charging/discharging unit information.

3.  The charging/discharging control device according to claim 2, wherein
    the charging/discharging unit grouping unit is configured to perform grouping by similarity in maximum charging power, maximum discharging power, charging efficiency, and discharging efficiency of the charging/discharging units.

4.  The charging/discharging control device according to claim 2, wherein
    the charging/discharging unit grouping unit is configured to perform grouping using model numbers of the charging/discharging units.

5.  The charging/discharging control device according to any one of claims 1 to 4, further comprising:

    a charging/discharging performance management unit configured to manage charging/discharging performance of each of the charging/discharging units: and
    a charger/discharger information estimation unit configured to estimate the charging/discharging unit information on the basis of the charging/discharging performance, wherein
    the charging/discharging unit grouping unit is configured to group the charging/discharging units on the basis of the estimated charging/discharging unit information.

6. A charging/discharging control method, comprising the steps of:

managing charging/discharging capacity information of a plurality of electric vehicles;
managing schedule information of charging/discharging the electric vehicles;
managing charging/discharging unit information of charging/discharging units;
managing information on power rate;
grouping the charging/discharging units on the basis of the charging/discharging unit information;
setting allocation constraints for the charging/discharging units on the basis of the schedule information, for each group of the charging/discharging units; and
creating a charging/discharging plan by allocating the group of charging/discharging units to the electric vehicles so as to reduce power cost on the basis of the allocation constraints, the charging/discharging capacity information, and the power rate information.

F I G. 1

F I G. 2

F I G. 3

```
                    ┌─────────┐
                    │  start  │
                    └─────────┘
                         │
                         ▼
        ┌──────────────────────────────┐  ╭S101
        │     INPUT EV INFORMATION     │
        └──────────────────────────────┘
                         │
                         ▼
        ┌──────────────────────────────┐  ╭S102
        │ INPUT CHARGING/DISCHARGING   │
        │        UNIT INFORMATION      │
        └──────────────────────────────┘
                         │
                         ▼
        ┌──────────────────────────────┐  ╭S103
        │   INPUT FACILITY INFORMATION │
        └──────────────────────────────┘
                         │
                         ▼
        ┌──────────────────────────────┐  ╭S104
        │        INPUT PARKING         │
        │        LOT INFORMATION       │
        └──────────────────────────────┘
                         │
                         ▼
        ┌──────────────────────────────┐  ╭S105
        │        INPUT SCHEDULE        │
        └──────────────────────────────┘
                         │
                         ▼
        ┌──────────────────────────────┐  ╭S106
        │        GROUP CHARGING        │
        │     /DISCHARGING UNITS       │
        └──────────────────────────────┘
                         │
                         ▼
        ┌──────────────────────────────┐  ╭S107
        │   SET ALLOCATION CONSTRAINTS │
        └──────────────────────────────┘
                         │
                         ▼
        ┌──────────────────────────────┐  ╭S108
        │       CREATE CHARGING        │
        │     /DISCHARGING PLAN        │
        └──────────────────────────────┘
                         │
                         ▼
        ┌──────────────────────────────┐  ╭S109
        │       NOTIFY CHARGING        │
        │     /DISCHARGING PLAN        │
        └──────────────────────────────┘
                         │
                         ▼
                    ┌─────────┐
                    │  goal   │
                    └─────────┘
```

F I G. 4

| EV_ID | MAXIMUM SOC [kWh] | MINIMUM SOC [kWh] | MAXIMUM CHARGING POWER [kW] | MAXIMUM DISCHARGING POWER [kW] | CHARGING EFFICIENCY [%] | DISCHARGING EFFICIENCY [%] |
|---|---|---|---|---|---|---|
| EV001 | 200 | 0 | 10 | 10 | 100 | 100 |
| EV002 | 200 | 0 | 10 | 10 | 100 | 100 |
| EV003 | 200 | 0 | 100 | 100 | 100 | 100 |
| EV004 | 200 | 0 | 50 | 50 | 100 | 100 |

F I G. 5

| CHARGING /DISCHARGING UNIT ID | MODEL NUMBER | MAXIMUM CHARGING POWER [kW] | MAXIMUM DISCHARGING POWER [kW] | CHARGING EFFICIENCY [%] | DISCHARGING EFFICIENCY [%] |
|---|---|---|---|---|---|
| CH001 | XX11 | 50 | 50 | 100 | 100 |
| CH002 | XX12 | 40 | 40 | 100 | 100 |
| CH003 | YY11 | 5 | 5 | 100 | 100 |

F I G. 6

| | | UNIT | RATE[¥] |
|---|---|---|---|
| BASIS RATE | | ONE CONTRACT | 1, 210. 00 |
| METER RATE | 00:00–07:00 | 1kWh | 10. 70 |
| | 07:00–23:00 | | 21. 66 |
| | 23:00–00:00 | | 10. 70 |

F I G. 7

| UPPER LIMIT VALUE | LOWER LIMIT VALUE |
|---|---|
| 100 | 0 |

F I G. 8

| CHARGING /DISCHARGING UNIT ID | SECTION | USAGE |
|---|---|---|
| CH001 | PL001 | ○ |
| CH002 | PL002 | × |
| CH003 | PL003 | × |

F I G. 9

|       |        |
|-------|--------|
| PL001 | ● CH001 |
| PL002 | ● CH002 |
| PL003 | ● CH003 |

F I G. 1 0

| EV_ID | ARRIVAL TIME | DEPARTURE TIME | SOC AT ARRIVAL [kWh] | SOC AT DEPARTURE [kWh] |
|-------|--------------|----------------|----------------------|------------------------|
| EV001 | 2020/1/1 00:00 | 2020/1/2 00:00 | 0 | 120 |
| EV002 | 2020/1/1 00:00 | 2020/1/2 00:00 | 0 | 120 |
| EV003 | 2020/1/1 00:00 | 2020/1/1 12:00 | 0 | 160 |
| EV004 | 2020/1/1 00:00 | 2020/1/1 12:00 | 0 | 100 |

F I G. 1 1

| GROUP ID | NUMBER OF UNITS | MAXIMUM CHARGING POWER [kW] | MAXIMUM DISCHARGING POWER [kW] | CHARGING EFFICIENCY [%] | DISCHARGING EFFICIENCY [%] |
|---|---|---|---|---|---|
| GRP001 | 2 | 45 | 45 | 100 | 100 |
| GRP002 | 1 | 5 | 5 | 100 | 100 |

# F I G. 1 2

|  | GRP001 | GRP002 |
|---|---|---|
| EV001 | ○ |  |
| EV002 | ○ |  |
| EV003 |  | ○ |
| EV004 |  |  |

|  | GRP001 | GRP002 |
|---|---|---|
| EV001 | ○ |  |
| EV002 | ○ |  |
| EV003 |  |  |
| EV004 |  | ○ |

|  | GRP001 | GRP002 |
|---|---|---|
| EV001 |  | ○ |
| EV002 | ○ |  |
| EV003 | ○ |  |
| EV004 |  |  |

|  | GRP001 | GRP002 |
|---|---|---|
| EV001 |  |  |
| EV002 | ○ |  |
| EV003 | ○ |  |
| EV004 |  | ○ |

|  | GRP001 | GRP002 |
|---|---|---|
| EV001 | ○ |  |
| EV002 |  | ○ |
| EV003 | ○ |  |
| EV004 |  |  |

|  | GRP001 | GRP002 |
|---|---|---|
| EV001 | ○ |  |
| EV002 |  |  |
| EV003 | ○ |  |
| EV004 |  | ○ |

|  | GRP001 | GRP002 |
|---|---|---|
| EV001 |  | ○ |
| EV002 | ○ |  |
| EV003 |  |  |
| EV004 | ○ |  |

|  | GRP001 | GRP002 |
|---|---|---|
| EV001 |  |  |
| EV002 | ○ |  |
| EV003 |  | ○ |
| EV004 | ○ |  |

|  | GRP001 | GRP002 |
|---|---|---|
| EV001 | ○ |  |
| EV002 |  | ○ |
| EV003 |  |  |
| EV004 | ○ |  |

|  | GRP001 | GRP002 |
|---|---|---|
| EV001 | ○ |  |
| EV002 |  |  |
| EV003 |  | ○ |
| EV004 | ○ |  |

|  | GRP001 | GRP002 |
|---|---|---|
| EV001 |  | ○ |
| EV002 |  |  |
| EV003 | ○ |  |
| EV004 | ○ |  |

|  | GRP001 | GRP002 |
|---|---|---|
| EV001 |  |  |
| EV002 |  | ○ |
| EV003 | ○ |  |
| EV004 | ○ |  |

## F I G. 1 3

|       | CH001 | CH002 | CH003 |
|-------|-------|-------|-------|
| EV001 | ○     |       |       |
| EV002 |       | ○     |       |
| EV003 |       |       | ○     |
| EV004 |       |       |       |

|       | CH001 | CH002 | CH003 |
|-------|-------|-------|-------|
| EV001 | ○     |       |       |
| EV002 |       | ○     |       |
| EV003 |       |       |       |
| EV004 |       |       | ○     |

|       | CH001 | CH002 | CH003 |
|-------|-------|-------|-------|
| EV001 |       | ○     |       |
| EV002 | ○     |       |       |
| EV003 |       |       | ○     |
| EV004 |       |       |       |

|       | CH001 | CH002 | CH003 |
|-------|-------|-------|-------|
| EV001 |       | ○     |       |
| EV002 | ○     |       |       |
| EV003 |       |       |       |
| EV004 |       |       | ○     |

|       | CH001 | CH002 | CH003 |
|-------|-------|-------|-------|
| EV001 | ○     |       |       |
| EV002 |       |       | ○     |
| EV003 |       | ○     |       |
| EV004 |       |       |       |

|       | CH001 | CH002 | CH003 |
|-------|-------|-------|-------|
| EV001 | ○     |       |       |
| EV002 |       |       |       |
| EV003 |       | ○     |       |
| EV004 |       |       | ○     |

|       | CH001 | CH002 | CH003 |
|-------|-------|-------|-------|
| EV001 |       |       | ○     |
| EV002 | ○     |       |       |
| EV003 |       | ○     |       |
| EV004 |       |       |       |

|       | CH001 | CH002 | CH003 |
|-------|-------|-------|-------|
| EV001 |       |       |       |
| EV002 | ○     |       |       |
| EV003 |       | ○     |       |
| EV004 |       |       | ○     |

|       | CH001 | CH002 | CH003 |
|-------|-------|-------|-------|
| EV001 | ○     |       |       |
| EV002 |       |       | ○     |
| EV003 |       |       |       |
| EV004 |       | ○     |       |

|       | CH001 | CH002 | CH003 |
|-------|-------|-------|-------|
| EV001 | ○     |       |       |
| EV002 |       |       |       |
| EV003 |       |       | ○     |
| EV004 |       | ○     |       |

|       | CH001 | CH002 | CH003 |
|-------|-------|-------|-------|
| EV001 |       |       | ○     |
| EV002 | ○     |       |       |
| EV003 |       |       |       |
| EV004 |       | ○     |       |

|       | CH001 | CH002 | CH003 |
|-------|-------|-------|-------|
| EV001 |       |       |       |
| EV002 | ○     |       |       |
| EV003 |       |       | ○     |
| EV004 |       | ○     |       |

|       | CH001 | CH002 | CH003 |
|-------|-------|-------|-------|
| EV001 |       | ○     |       |
| EV002 |       |       | ○     |
| EV003 | ○     |       |       |
| EV004 |       |       |       |

|       | CH001 | CH002 | CH003 |
|-------|-------|-------|-------|
| EV001 |       | ○     |       |
| EV002 |       |       |       |
| EV003 | ○     |       |       |
| EV004 |       |       | ○     |

|       | CH001 | CH002 | CH003 |
|-------|-------|-------|-------|
| EV001 |       | ○     |       |
| EV002 |       |       | ○     |
| EV003 |       |       |       |
| EV004 | ○     |       |       |

|       | CH001 | CH002 | CH003 |
|-------|-------|-------|-------|
| EV001 |       | ○     |       |
| EV002 |       |       |       |
| EV003 |       |       | ○     |
| EV004 | ○     |       |       |

|       | CH001 | CH002 | CH003 |
|-------|-------|-------|-------|
| EV001 |       |       | ○     |
| EV002 |       | ○     |       |
| EV003 | ○     |       |       |
| EV004 |       |       |       |

|       | CH001 | CH002 | CH003 |
|-------|-------|-------|-------|
| EV001 |       |       |       |
| EV002 |       | ○     |       |
| EV003 | ○     |       |       |
| EV004 |       |       | ○     |

|       | CH001 | CH002 | CH003 |
|-------|-------|-------|-------|
| EV001 |       |       | ○     |
| EV002 |       | ○     |       |
| EV003 |       |       |       |
| EV004 | ○     |       |       |

|       | CH001 | CH002 | CH003 |
|-------|-------|-------|-------|
| EV001 |       |       |       |
| EV002 |       | ○     |       |
| EV003 |       |       | ○     |
| EV004 | ○     |       |       |

|       | CH001 | CH002 | CH003 |
|-------|-------|-------|-------|
| EV001 |       |       | ○     |
| EV002 |       |       |       |
| EV003 | ○     |       |       |
| EV004 |       | ○     |       |

|       | CH001 | CH002 | CH003 |
|-------|-------|-------|-------|
| EV001 |       |       |       |
| EV002 |       |       | ○     |
| EV003 | ○     |       |       |
| EV004 |       | ○     |       |

|       | CH001 | CH002 | CH003 |
|-------|-------|-------|-------|
| EV001 |       |       | ○     |
| EV002 |       |       |       |
| EV003 |       | ○     |       |
| EV004 | ○     |       |       |

|       | CH001 | CH002 | CH003 |
|-------|-------|-------|-------|
| EV001 |       |       |       |
| EV002 |       |       | ○     |
| EV003 |       | ○     |       |
| EV004 | ○     |       |       |

F I G. 1 4

| FACILITY ID | TIME ZONE | GROUP ID | CHARGING /DISCHARGING POWER [kWh] |
|---|---|---|---|
| EV001 | 2020/1/1 00:00 | GRP001 | 10 |
| EV001 | 2020/1/1 01:00 | GRP001 | 10 |
| . | . | | . |

F I G. 1 5

13

| |
|---|
| INPUT IF |
| ARITHMETIC DEVICE |
| STORAGE DEVICE |
| OUTPUT IF |

301
302
303
304

# FIG. 16

**13 — CHARGING/DISCHARGING CONTROL DEVICE**

- **101 — EV INFORMATION MANAGEMENT UNIT**
- **105 — ALLOCATION CONSTRAINT SETTING UNIT**
- **107 — CHARGING /DISCHARGING PLAN CREATION UNIT**
- **109 — CHARGE /DISCHARGE PLAN NOTIFICATION UNIT**
- **102 — SCHEDULE INFORMATION MANAGEMENT UNIT**
- **104 — CHARGING /DISCHARGING UNIT GROUPING UNIT**
- **103 — CHARGING /DISCHARGING INFORMATION MANAGEMENT UNIT**
- **202 — CHARGING /DISCHARGING UNIT INFORMATION ESTIMATION UNIT**
- **106 — FACILITY INFORMATION MANAGEMENT UNIT**
- **108 — PARKING LOT INFORMATION MANAGEMENT UNIT**
- **201 — CHARGING /DISCHARGING PERFORMANCE INFORMATION MANAGEMENT UNIT**

F I G. 1 7

```
                    ┌─────────┐
                    │  start  │
                    └─────────┘
                         │
                         ▼
         ┌──────────────────────────────┐  S101
         │      INPUT EV INFORMATION     │
         └──────────────────────────────┘
                         │
                         ▼
         ┌──────────────────────────────┐  S102
         │  INPUT CHARGING/DISCHARGING   │
         │        UNIT INFORMATION        │
         └──────────────────────────────┘
                         │
                         ▼
         ┌──────────────────────────────┐  S103
         │   INPUT FACILITY INFORMATION  │
         └──────────────────────────────┘
                         │
                         ▼
         ┌──────────────────────────────┐  S104
         │         INPUT PARKING          │
         │        LOT INFORMATION         │
         └──────────────────────────────┘
                         │
                         ▼
         ┌──────────────────────────────┐  S105
         │        INPUT SCHEDULE          │
         └──────────────────────────────┘
                         │
                         ▼
         ┌──────────────────────────────┐  S201
         │      ESTIMATE CHARGING         │
         │ /DISCHARGING UNIT INFORMATION  │
         └──────────────────────────────┘
                         │
                         ▼
         ┌──────────────────────────────┐  S106
         │        GROUP CHARGING          │
         │      /DISCHARGING UNITS        │
         └──────────────────────────────┘
                         │
                         ▼
         ┌──────────────────────────────┐  S107
         │    SET ALLOCATION CONSTRAINTS  │
         └──────────────────────────────┘
                         │
                         ▼
         ┌──────────────────────────────┐  S108
         │       CREATE CHARGING          │
         │      /DISCHARGING PLAN         │
         └──────────────────────────────┘
                         │
                         ▼
         ┌──────────────────────────────┐  S109
         │       NOTIFY CHARGING          │
         │      /DISCHARGING PLAN         │
         └──────────────────────────────┘
                         │
                         ▼
         ┌──────────────────────────────┐  S202
         │       ACQUIRE CHARGING         │
         │   /DISCHARGING PERFORMANCE     │
         └──────────────────────────────┘
                         │
                         ▼
                    ┌─────────┐
                    │  goal   │
                    └─────────┘
```

F I G. 1 8

| EV_ID | CHARGING /DISCHARGING UNIT ID | TIME | CHARGING /DISCHARGING POWER [kW] | INITIAL SOC [kWh] | END SOC [kWh] |
|---|---|---|---|---|---|
| EV001 | CH001 | 2019/12/31 10:00 | -10 | 10 | 14.0 |
| EV002 | CH001 | 2019/12/30 10:00 | -10 | 20 | 24.5 |

## INTERNATIONAL SEARCH REPORT

| | International application No. |
|---|---|
| | PCT/JP2020/049275 |

### A. CLASSIFICATION OF SUBJECT MATTER

G06Q 50/06(2012.01)i; H02J 7/00(2006.01)i; H02J 7/02(2016.01)i; H02J 3/00(2006.01)i; B60L 53/14(2019.01)i
FI: H02J7/00 P; H02J3/00 170; B60L53/14; G06Q50/06; H02J7/02 F

According to International Patent Classification (IPC) or to both national classification and IPC

### B. FIELDS SEARCHED

Minimum documentation searched (classification system followed by classification symbols)
G06Q50/06; H02J7/00; H02J7/02; H02J3/00; B60L53/14

Documentation searched other than minimum documentation to the extent that such documents are included in the fields searched

| | |
|---|---|
| Published examined utility model applications of Japan | 1922–1996 |
| Published unexamined utility model applications of Japan | 1971–2021 |
| Registered utility model specifications of Japan | 1996–2021 |
| Published registered utility model applications of Japan | 1994–2021 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP 2018-182887 A (MITSUBISHI ELECTRIC CORP.) 15 November 2018 (2018-11-15) paragraphs [0010]-[0042], fig. 1-18 | 1-6 |
| A | WO 2013/099549 A1 (MITSUBISHI ELECTRIC CORP.) 04 July 2013 (2013-07-04) paragraphs [0012]-[0132], fig. 1-19 | 1-6 |
| A | JP 2016-226091 A (TOSHIBA CORP.) 28 December 2016 (2016-12-28) paragraphs [0007]-[0125], fig. 1-22 | 1-6 |
| A | JP 2015-019465 A (TOSHIBA CORP.) 29 January 2015 (2015-01-29) paragraphs [0012]-[0055], fig. 1-10 | 1-6 |

☐ Further documents are listed in the continuation of Box C.      ☒ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 28 January 2021 (28.01.2021) | 09 February 2021 (09.02.2021) |

| Name and mailing address of the ISA/ | Authorized officer |
|---|---|
| Japan Patent Office<br>3-4-3, Kasumigaseki, Chiyoda-ku,<br>Tokyo 100-8915, Japan | |
| | Telephone No. |

Form PCT/ISA/210 (second sheet) (January 2015)

## INTERNATIONAL SEARCH REPORT
### Information on patent family members

| International application No. |
| --- |
| PCT/JP2020/049275 |

| Patent Documents referred in the Report | Publication Date | Patent Family | Publication Date |
| --- | --- | --- | --- |
| JP 2018-182887 A | 15 Nov. 2018 | (Family: none) | |
| WO 2013/099549 A1 | 04 Jul. 2013 | US 2014/0361745 A1 paragraphs [0031]-[0155], fig. 1-19 CN 104025418 A | |
| JP 2016-226091 A | 28 Dec. 2016 | (Family: none) | |
| JP 2015-019465 A | 29 Jan. 2015 | (Family: none) | |

Form PCT/ISA/210 (patent family annex) (January 2015)

**EP 4 273 783 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012186895 A